# EUROPEAN PATENT APPLICATION

(11) **EP 2 075 678 A2**
(43) Date of publication of application: **01.07.2009**
(21) Application number: 08163204.4
(22) Date of filing: 28.08.2008
(51) Int. Cl.: G06F 3/044

(54) **Position sensing display**

(30) Priority: 27.12.2007 US 16822 P
(71) Applicant: TPO Displays Corp., Miao-Li County (TW)
(72) Inventor: Edwards, Martin John, Crawley Surrey RH11 7DA (GB)
(74) Representative: Greene, Simon Kenneth

(57) **Abstract**

A position sensing display integrates a touch sensor with an active matrix LCD panel. The panel includes both coarse (12) and fine (4,6) sensing means. The fine sensing means includes fine sense electrodes combined together in groups, the groups being interdigitated i.e. alternating across the display. In use, the fine sensing electrodes determine the position of a sensed object such as a stylus or finger accurately but non-uniquely, and the coarse sensing means determines which of the plurality of non-unique positions is correct.

## Description

The invention relates to a position sensing display and a method of operation of such a display.

Position sensors have been combined with displays in the form of a transparent position sensing overlay which is placed over the display to record touch or pen input. Such sensors may consist of arrays of electrodes which are connected to driving/sensing circuits.

The sensors may be capacitance sensors with sets of electrodes connected to drive and/or sensing circuits. The location of an object such as a stylus or finger is then determined by measuring changes in the capacitances associated with the electrodes which are affected by the object in close vicinity.

In order to provide increased resolution, an increase in the number of sensing electrodes is required. However, these sensing electrodes then need to be connected to sensing circuits or drive circuits, and for a large array at high resolution the number of connections required can be very large indeed. Connection is a relatively difficult manufacturing operation and a large number of connections both adds to the cost and also may provide a large number of possibilities for failure, reducing reliability.

There is thus a need for relatively high resolution sensing without a corresponding number of connections.

According to the invention there is provided a method of position sensing according to claim 1.

The invention also relates to a position sensitive panel according to claim 5 and a display according to claim 13.

By combining sensor electrodes together in groups, the increase in the number of connections normally resulting from an increase in resolution is minimised. In spite of a reduced number of connections, improved resolution is still possible.

The panel is a position sensitive panel, often referred to as a touch sensitive panel. Strictly speaking, such panels can operate using capacitative coupling and so they do not require touching, merely close proximity, so the term position sensitive panel is used instead of the more common touch sensitive panel in the present description.

The display may include an active matrix panel, for example an active matrix liquid crystal display (AMLCD) panel or an active matrix organic light emitting diode display (AMOLED) panel. In this way, all the circuitry and processing can be provided on the active panel and the position sensing electrodes provided on the front panel, which eases manufacture.

For a better understanding of the invention embodiments will now be described, purely by way of example, with reference to the accompanying drawings, in which:
Figure 1 is a front view of a first embodiment of the invention;
Figure 2 is a side view of a first embodiment of the invention;
Figures 3 to 5 are views illustrating operation of the first embodiment;
Figure 6 is a front view of a second embodiment of the invention;
Figures 7 and 8 are views illustrating operation of the second embodiment; and
Figure 9 is a view illustrating a third embodiment of the invention.

The Figures are schematic and not to scale. Where like or similar components exist in different Figures, the same reference numeral is used and the description relating thereto not normally repeated.

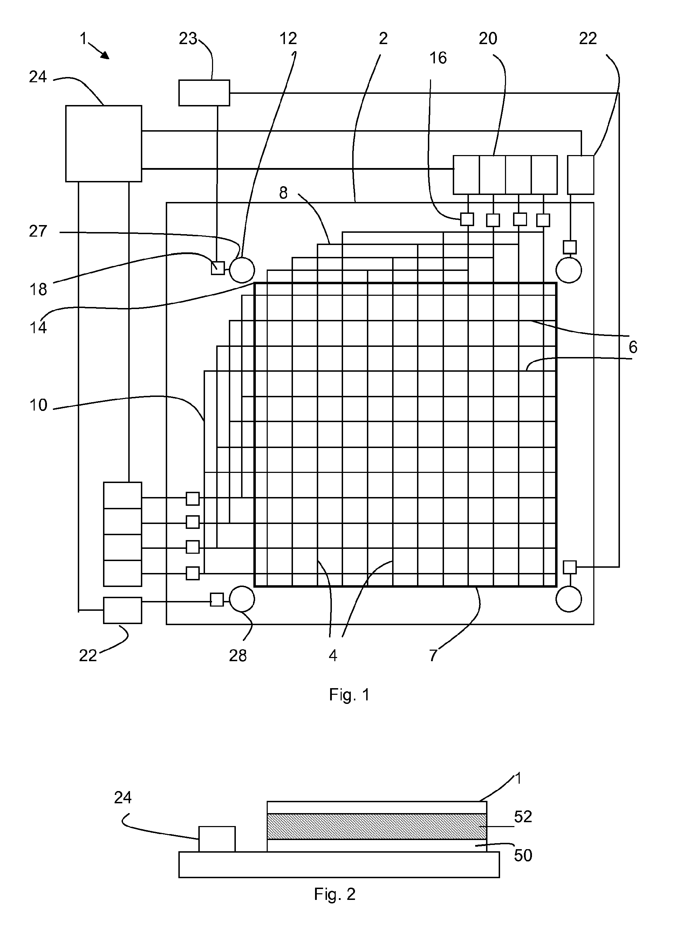

Referring to Figure 1, a front position sensitive panel 1 for mounting at the front of a display is shown.

The panel 1 includes a transparent substrate 2, and a plurality of fine x-sense electrodes 4 arranged in parallel extending in a column direction across the substrate. A plurality of fine y-sense electrodes 6 extend in a row direction across the substrate, insulated from the fine x-sense electrodes. These cover a sensing region 7 of the panel, indicated in bold. Preferably, the sensing region corresponds to the area of the display.

The fine x-sense electrodes are arranged in groups, as are the y sense electrodes. There are n groups 8 of fine x-sense electrodes and every nth fine x-sense electrode is connected together as a group. Thus, the groups of fine x-sense electrodes are effectively interdigitated with each other. Put another way, the groups alternate or cycle, the electrodes across the display belonging to each group in turn from a first group until all groups are used, the cycle then starting again at the first group.

For simplicity, in the drawing, four groups of fine x-sense electrodes are shown, each having three electrodes. The groups are defined by being connected together. In a typical manufactured device, there may be many more groups of electrodes and also many more electrodes in each group.

Similarly, there are m groups 10 of fine y-sense electrodes and every mth fine y-sense electrode is connected together as a group.

The fine x and y sense electrodes 4,6 act as electrodes for sensing at a fine resolution.

The electrodes are themselves transparent and they may be made, for example, of transparent conductor such as indium tin oxide.

The front position sensitive panel also includes four coarse sense electrodes 12, one at each corner 14 of the panel.

Each of the groups of fine sense electrodes 8,10 is connected to a corresponding connector 16. Similarly, each of the coarse sense electrodes 12 is connected individually to a corresponding connector 18.

The coarse sense electrodes 12 include drive electrodes 27 and pick-up electrodes 28. The drive electrodes 27 are arranged at opposed corners 14 of the panel and the pick-up electrodes 28 are arranged at the alternate opposed corners 14.

The fine and coarse connectors 16,18 are connected to corresponding fine and coarse sense circuits 20,22, not on the transparent panel itself. A coarse drive unit 23 is also provided connected to the drive electrodes 27 for driving the electrodes.

A calculation unit 24 is connected to the coarse and fine sense circuits 22,20.

Referring to Figure 2, in the specific embodiment the touch panel 1 is the front panel of an active matrix liquid crystal display having a rear active panel 50, liquid crystal 52 being provided between the touch panel 1 and the rear active panel 50, being controlled to display using the rear active panel.

The sense circuits 20,22 are provided as part of the circuitry of the rear active panel 50 and the calculation unit 24, is a separate circuit in the embodiment. In alternative arrangements, the calculation unit 24 may also be integrated in the rear active panel 50.

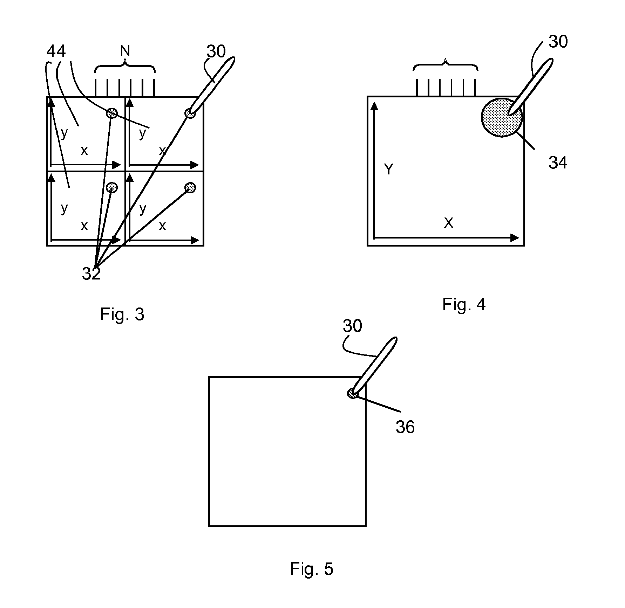

In use, illustrated in Figures 3 to 5, a first fine sensing operation of the position of a sensed object 30 is carried out using the fine sense circuits and the groups of fine sense electrodes. This may be done using capacitative coupling of the sensed object and adjacent sense electrodes. The sensed object 30 itself may be a stylus or a finger, for example. The signal measured on the sense circuits is affected by the capacitative coupling of the sensed object 30 with adjacent fine sense electrodes. Accordingly, the sense circuits which pick up a change in signal indicate thereby that the sense electrodes which are adjacent to the sensed object.

This fine sensing operation provides position information at the fine resolution of the fine sense electrodes but the grouping of the electrodes means that the determined position is not unique.

In the simplified diagrams of Figures 3 to 5, each group of fine sense electrodes has two electrodes, so the fine position sensing operation determines four candidate positions 32 at a fine resolution in Figure 3.

A coarse sensing operation is carried out using the coarse sense circuits to determine the coarse position 34 uniquely at a coarse resolution, as illustrated in Figure 4. Signals are applied by coarse drive unit 23 to the drive electrodes 27 and the signal picked up by the pick-up electrodes 28 is measured by coarse sense circuits 22 to determine the proximity of a sensed object to the corners 14, and hence the coarse position 34.

The calculation unit 24 then combines the results of the coarse and fine sensing operations as illustrated in Figure 5 by selecting the candidate position 32 corresponding most closely to the coarse position 34 determined at coarse resolution, to arrive at sense location 36.

By grouping the fine sense electrodes, the number of fine connectors 16 is very much less than if each fine sense electrode had its own connector. This greatly eases the manufacture of a device with fine resolution.

Without using this technique, the number of connectors can become prohibitively large. In order to get a fine resolution of the position of a sense probe, a fine grid of sense electrodes needs to be provided. Unfortunately, a large number of sense electrodes also require a large number of connections and the reliability of connections is a key issue in the reliability of a position sensitive screen.

This applies in particular where the electrodes are integrated into the front of a display device as in the embodiment described. Such an approach means that the reliability of the connection between the front and rear panels becomes a critical reliability issue, which is greatly reduced by reducing the number of connections.

Of course, the grouping of electrodes makes it more difficult to uniquely determine the position of the sensed object 30, but this issue is resolved using the coarse and fine sensing technique.

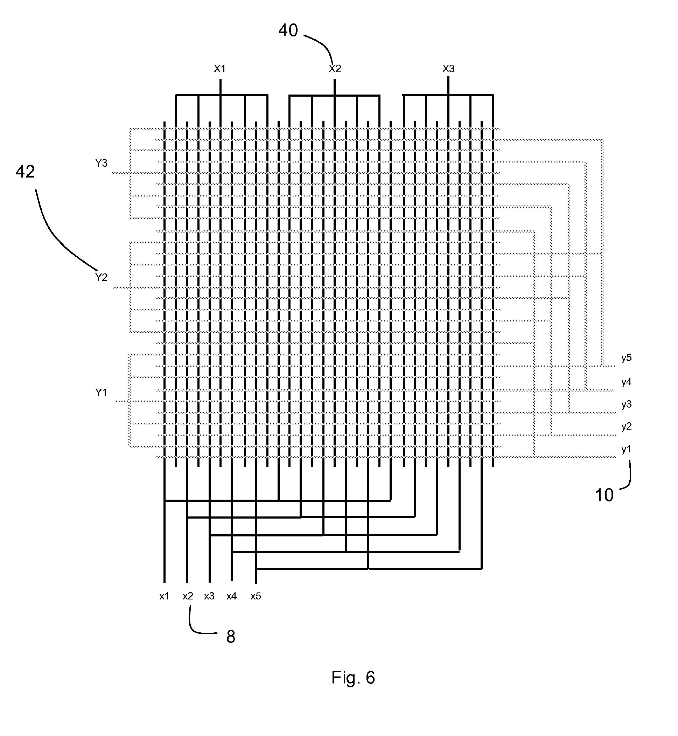

In an alternative embodiment, illustrated in Figure 6, an alternative arrangement of coarse sense electrodes is used. In this arrangement, a plurality of coarse sense electrodes are used extending across the panel as coarse sense electrodes between the fine sense electrodes. The coarse sense electrodes, like the fine sense electrodes, are lines. Thus, in this embodiment, there are as many coarse sense electrodes as fine sense electrodes, but they are grouped differently. The groups 40,42 of coarse sense electrodes are the adjacent coarse sense electrodes, including groups 40 of coarse x-sense electrodes and groups 42 of coarse y-sense electrodes. Thus, in this case each group 40,42 of coarse sense electrodes is connected to a corresponding coarse sense connector 18. The coarse sense electrodes 40,42 in this embodiment operate in the same way as the fine sense electrodes 4,6, differing in how they are connected together in groups.

The groups of coarse electrodes are arranged to correspond to the groups of fine electrodes. Assuming that the fine electrodes are divided into n groups, the fine electrodes make a repeating pattern, with a first electrode, a second electrode, and so on up to an nth electrode, before starting again with a first electrode.

In view of the repeating nature of the groups, the position sensitive panel may be divided into sensing areas 44 as shown. Each sensing area starts with the x and y sense electrodes of a first group and includes one sense electrode of each group. The next sensing area 44 starts with the next x and/or y sense electrodes of the first group again.

In terms of the coarse sense electrodes, each of the sensing areas 44 corresponds to a single group of coarse electrodes in both the x and y directions. Thus, in this embodiment, the coarse sense electrodes are divided up into groups corresponding to the repeat cycle of the fine sense electrodes, so with n groups of fine sense electrodes there will be n sense electrodes in each group of coarse sense electrodes.

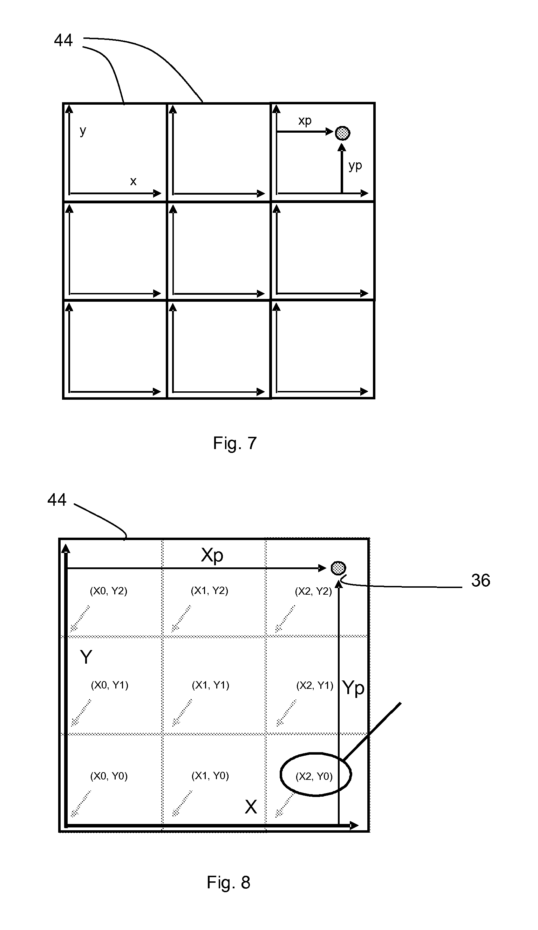

The way in which the calculation unit determines position will now be described in further detail with reference to Figures 7 and 8.

The fine sensing operation gives a position result of (xp,yp), essentially within each high resolution sensing area. The position of the sensed object will be at this position, sensed within a high resolution sensing area, but it is not known from this fine sensing operation which sensing area includes the sensed object position.

The coarse sensing operation uses the coarse sense electrodes and determines a coarse position (Xp,Yp) which indicates which of the sensing areas 44 senses the sensed object, essentially which of the groups of coarse x sense electrodes and coarse y sense electrodes sense the object.

By combining these two pieces of information the position of the object can be determined to be the sense location illustrated in Figure 8.

In a modification of this approach, the coarse sense location can be adjusted based on the fine sense location.

For example, when an object is located close to the boundary between sensing areas it is possible that the coordinates determined from the low resolution sensing may place the object in the wrong sensing area. This possibility can be avoided by using a more complex algorithm for determining the position of the object. In particular, the coarse position determination determining (Xp,Yp) may make use of the fine position information (xp,yp) by identifying whether xp and yp are large or small. Consider the case where the coarse position determination shows that the coarse position is close to a boundary between two sensing areas. If xp is large, the position should be close to the right hand side of the sensing area (in the Figures) and hence in the event of a coarse position close to the boundary between sensing areas, the sensing area with lower Xp is selected. Conversely, if xp is small, the position should be close to the left hand side of the sensing area and so the sensing area with higher Xp is selected.

A similar approach can be taken with the y-sensing.

The above embodiments are purely by way of example.

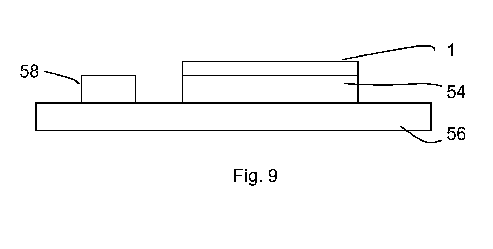

For example, although the above description describes embodiments with an integrated touch panel 1, in an alternative embodiment illustrated in Figure 9 the touch panel 1 is a separate panel mounted on top of a display 54, in the embodiment an active matrix display 54 mounted on a support substrate 56. The sense circuits 20,22 and calculation unit 24 are illustrated as being in a single integrated unit 58 mounted on the support substrate 56.

Alternatively, the sense circuits 20,22 may be included in the drive circuitry of the active matrix panel.

In the embodiment above of Figure 6, the sensing areas 44 correspond to both the coarse and fine electrode groups, being the repeat unit of the fine electrode groups and the size of the coarse electrode groups. However, this is not essential, and as long as the coarse electrode determination is accurate enough, it is not necessary for the coarse and fine electrode groups to be commensurate in this way. In particular, in some arrangements it may be useful to have a better coarse resolution than this, though still worse than the fine resolution.

Further, the coarse and fine sensing operations may take place simultaneously, or one after another, as required.

In the Figure 6 arrangement, the number of coarse electrodes matches the number of fine sense electrodes. This is not required and it is also possible to use fewer coarse electrodes.

Although in the above embodiment related to Figure 6, the coarse and fine sense electrodes are separate electrodes, it is also possible to use the same electrodes as coarse and fine electrodes. This may be done, for example, by simply grouping the electrodes together as fine sense electrodes on one edge with every nth electrode in a group and as coarse sense electrodes on the other edge in groups of n electrodes. In this case, switches, for example thin film transistor switches, may be used to change the connections to the electrodes to carry out the coarse positioning and then to change the connections to carry out the fine positioning. The switches may be operated to alternate between coarse and fine positioning.

Although the above embodiment relates to a conventional active matrix liquid crystal display, the invention is equally applicable to alternative active matrix devices such as for example an active matrix organic light emitting diode display (AMOLED).

The electrodes need not all be fully transparent.

The calculation means 24 may be on a separate panel if required. A general purpose computer may be used.

## Claims

1. A method of sensing the position of a sensed object in front of a display, the display having a front position sensitive panel (1) having a plurality of fine x-sense electrodes (4) combined in interdigitated groups extending across the panel and a plurality of fine y-sense electrodes (6) combined in interdigitated groups extending across the panel across the fine x-sense electrodes, the method comprising:
carrying out a fine position sensing operation using the fine x and y sense electrodes, wherein the fine position sensing operation determines the position of the sensed object to be one of a plurality of positions at a fine resolution;
carrying out a coarse position sensing operation to determine the position of the sensed object to be a unique location at a coarser resolution than the fine position sensing operation; and
combining the results of the coarse and fine position sensing operation to identify the position of the sensed object uniquely at the fine resolution.

2. A method according to claim 1 wherein the step of carrying out a coarse position sensing operation uses a plurality of coarse sense electrodes (12), the method including driving at least one of the coarse sense electrodes with drive signals and sensing the signals picked up at the other coarse sense electrodes.

3. A method according to claim 1 wherein:
the step of carrying out a coarse position sensing operation uses a plurality of coarse x-sense electrodes (40) and coarse y-sense electrodes (42) extending across the display, divided into groups of at least one coarse x-sense electrode and at least one coarse y-sense electrode; and
the step of combining the results of the coarse and fine position sensing operation includes:
determining which group of at least one coarse x-sense electrode (40) and which group of at least one coarse y-sense electrode (42) corresponds to the position of the sensed object using the determined fine position as well as the results of the coarse position sensing operation; and
selecting as the output fine position to be the one of the plurality of positions corresponding to the determined group of at least one coarse x-sense electrode and group of at least one coarse y-sense electrode.

4. A method according to claim 1, wherein the display further comprises a rear active panel (50), wherein
the step of carrying out a fine position sensing operation includes generating a drive signal on the rear active panel, transmitting the drive signal to at least one of the fine sense electrodes (4,6), picking up a signal on others of the fine sense electrodes (4,6) and sensing the signals on the fine sense electrodes using a fine sense circuit (20) on the rear active panel; and
carrying out a coarse position sensing operation includes generating a drive signal on the rear active panel, transmitting the drive signal to at least one of the coarse sense electrodes (12), picking up a sense signal on the others of the coarse sense electrodes (12) and sensing the signals on the coarse sense electrodes using a coarse sense circuit (22) on the rear active panel.

5. A position sensitive panel for an active matrix display for sensing a sensed object, comprising:
a plurality of fine x-sense electrodes (4) extending across the display in parallel, the fine x-sense electrodes being grouped in interdigitated groups (8) of fine x-sense electrodes,
a plurality of fine y-sense electrodes (6) extending across the display in parallel and across the fine x-sense electrodes, the fine y-sense electrodes being grouped in interdigitated groups (10) of fine y-sense electrodes,
so that the fine x-sense and fine y-sense electrodes (4,6) provide position sensing of a sensed object to be in one of a plurality positions at a fine resolution; and
a means for carrying out coarse position sensing (12,27) for determining which of the plurality of positions correspond to the position of the sensed object.

6. A position sensitive panel according to claim 5 wherein each of the groups (8) of fine x-sense electrodes and each of the groups (10) of fine y-sense electrodes are connected to a single respective connector.

7. A position sensitive panel according to claim 5, or 6 wherein:
there are n groups (8) of fine x-sense electrodes (4) and m groups (10) of fine y-sense electrodes (6), n and m being integers,
every nth fine x-sense electrode (4) is connected together as a group; and
every mth fine y-sense electrode (6) is connected together as a group.

8. A position sensitive panel according to claim 5, 6 or 7 wherein the means for carrying out coarse position sensing is a plurality of coarse sense electrodes (12).

9. A position sensitive panel according to claim 8 wherein the coarse sense electrodes include a plurality of coarse x-sense electrodes (40) extending across the panel in parallel to the fine x-sense electrodes and a plurality of coarse y-sense electrodes (42) extending across the panel in parallel to the fine y-sense electrodes.

10. A position sensitive panel according to claim 9, wherein the coarse sense electrodes alternate with the fine sense electrodes,
the coarse x-sense electrodes (40) are connected together in groups of n coarse x-sense electrodes; and
the coarse y-sense electrodes (42) are connected together in groups of n coarse y-sense electrodes.

11. A position sensitive panel according to claim 10 wherein each of the groups of coarse x-sense electrodes and each of the groups of coarse y-sense electrodes are connected to a single respective connector.

12. A position sensitive panel according to claim 8 wherein the plurality of coarse sense electrodes (12) includes at least one pair of drive electrodes (27) and at least one pair of pick-up electrodes (28).

13. A display, comprising:
a rear panel (50);
a position sensitive panel (1) according to any of claims 5 to 12 mounted in front of the rear panel;
a plurality of fine sense circuits (20) on the rear panel (50) attached to respective fine sense connectors connected to the fine sense electrodes on the position sensitive panel;
a plurality of coarse sense circuits (22) on the rear panel (50) attached to respective coarse sense connectors connected to the means for carrying out coarse position sensing (12,27) on the position sensitive panel; and
a calculation means (24) electrically connected to the coarse and fine sense circuits (20,22) arranged to output a unique fine position of a sensed object on the basis of the readings of the coarse and fine sense circuits.

14. A display according to claim 13, wherein the rear panel (50) is an active matrix display panel.

15. A display according to claim 14, wherein the position sensitive panel (1) serves as the front panel of the display, further comprising liquid crystal (52) sandwiched directly between the position sensitive panel (1) and the rear panel (50).
